# EUROPEAN PATENT APPLICATION

(11) **EP 1 942 626 A1**
(43) Date of publication of application: **09.07.2008**
(21) Application number: 07022575.0
(22) Date of filing: 21.11.2007
(51) Int. Cl.: H04L 29/06

(54) **Methods and apparatuses for performing security error recovery in a wireless communications system**

(30) Priority: 21.11.2006 US 860223 P
(71) Applicant: Innovative Sonic Limited, Tortola (VG)
(72) Inventor: Jiang, Sam Shiaw-Shiang, Peitou Taipei City (TW)
(74) Representative: Schaeberle, Steffen

(57) **Abstract**

A method for performing security error recovery in a wireless communications system includes a Packet Data Convergence Protocol layer of the wireless communications system performing a security protection procedure for a Non-Access Stratum message (302), and the Packet Data Convergence Protocol layer including a protocol error detection and recovery function, for detecting a security error due to a security parameter going out of synchronization and for recovering synchronization of the security parameter (304).

## Description

This application claims the benefit of U.S. Provisional Application No. 60/860,223, filed on Nov 21, 2006 and entitled "Security structure for LTE", the contents of which are incorporated herein by reference.

The present invention relates to a method and apparatus for performing security error recovery in a wireless communications system according to the pre-characterizing clauses of claims 1, 4, 7 and 10.

The third generation (3G) mobile telecommunications system provides high frequency spectrum utilization, universal coverage, and high quality, high-speed multimedia data transmission, and also meets all kinds of QoS requirements simultaneously, providing diverse, flexible, two-way transmission services and better communication quality to reduce transmission interruption rates. According to the related protocol specifications, a protocol stack of the 3G mobile telecommunications system can be segmented into access stratum (AS) and non-access stratum (NAS). The AS comprises a Radio Resource Control (RRC), Radio Link Control (RLC), Media Access Control (MAC), Packet Data Convergence Protocol (PDCP), Broadcast/Multicast Control (BMC) and other sub-layers of different functions. Those skilled in the art are familiar with the operation of the above-mentioned sub-layers; therefore, they will not be further mentioned.

Long Term Evolution wireless communications system (LTE system), an advanced high-speed wireless communications system established upon the 3G mobile telecommunications system, supports only packet-switched transmission, and tends to implement both Medium Access Control (MAC) layer and Radio Link Control (RLC) layer in one single communication site, such as in Node B alone rather than in Node B and RNC (Radio Network Controller) respectively, so that the system structure becomes simpler.

A complete protocol specification is accomplished with lasting discussion, editing, and modification. Now, parts of the LTE structure are under Technical Report (TR) stage, meaning that the related protocol specifications are not finished. Therefore, many functions are still For Further Study (FFS).

According to the current system structure of the LTE system, the following can be summarized:
1. For User Plane, the layer structure is, from low to high, PHY (Physical layer), MAC, RLC, and PDCP.
2. For Control Plane, the layer structure is, from low to high, PHY, MAC, RLC, RRC, PDCP, and NAS.
3. For User Plane, ciphering is performed in PDCP.
4. For Control Plane, ciphering and IP for RRC messages are done in RRC and ciphering and IP for NAS messages are done in PDCP.
5. NAS messages may or may not be concatenated with RRC messages.
6. No IP from RRC for non-concatenated messages.
7. IP from RRC for concatenated NAS messages is FFS.
8. Protocol error detection and recovery function is performed in RLC.

Therefore, the prior art does not well specify the operations of IP from RRC for concatenated NAS messages and ciphering from RRC for concatenated NAS messages or non-concatenated NAS messages. Besides, since RLC does not perform security, protocol errors due to security parameters out of sync, such as HFN (Hyper Frame Number) out of sync, cannot be detected by the RLC layer. In other words, the RLC layer cannot perform protocol error detection and recovery function under the current LTE system structure.

This in mind, the present invention aims at providing a method and apparatus for performing security error recovery in a wireless communications system, so as to timely detect and recover security errors.

This is achieved by a method and apparatus for performing security error recovery in a wireless communications system according to the pre-characterizing clauses of claims 1, 4, 7 and 10. The dependent claims pertain to corresponding further developments and improvements.

As will be seen more clearly from the detailed description following below, the claimed method for performing security error recovery in a wireless communications system comprises a Packet Data Convergence Protocol layer of the wireless communications system performing a security protection procedure for a Non-Access Stratum message, and the Packet Data Convergence Protocol layer comprising a protocol error detection and recovery function, for detecting a security error due to a security parameter going out of synchronization and for recovering synchronization of the security parameter.

In the following, the invention is further illustrated by way of example, taking reference to the accompanying drawings. Thereof
Fig. 1 is a function block diagram of a wireless communications device.
Fig. 2 is a diagram of program code of Fig. 1.
Fig. 3 and Fig. 4 are flowcharts of processes according to embodiments of the present invention.

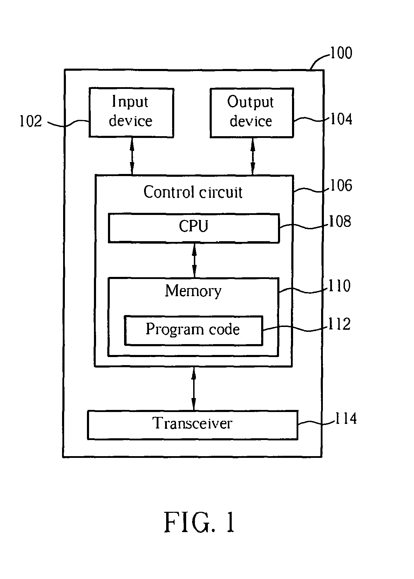

Please refer to Fig. 1, which is a functional block diagram of a communications device 100 in a wireless communications system. The wireless communications system is preferably the LTE system. For the sake of brevity, Fig. 1 only shows an input device 102, an output device 104, a control circuit 106, a central processing unit (CPU) 108, a memory 110, a program code 112, and a transceiver 114 of the communications device 100. In the communications device 100, the control circuit 106 executes the program code 112 in the memory 110 through the CPU 108, thereby controlling an operation of the communications device 100. The communications device 100 can receive signals input by a user through the input device 102, such as a keyboard, and can output images and sounds through the output device 104, such as a monitor or speakers. The transceiver 114 is used to receive and transmit wireless signals, delivering received signals to the control circuit 106, and outputting signals generated by the control circuit 106 wirelessly. From a perspective of a communications protocol framework, the transceiver 114 can be seen as a portion of Layer 1, and the control circuit 106 can be utilized to realize functions of Layer 2 and Layer 3. Preferably, the communications device 100 is utilized in a third generation (3G) mobile communications system.

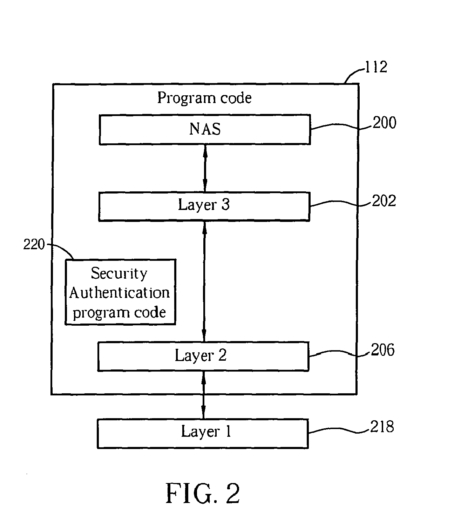

Please continue to refer to Fig. 2. Fig. 2 is a diagram of the program code 112 shown in Fig. 1. The program code 112 includes a Non Access Stratum (NAS) 200, a Layer 3 202, and a Layer 2 206, and is coupled to a Layer 1 218. The NAS 200 can generate NAS messages for realizing NAS applications. The Layer 3 202 is preferably composed of an RRC layer and a PDCP layer, for performing resource control. The Layer 2 206 performs link control, and the Layer 1 218 performs physical connections.

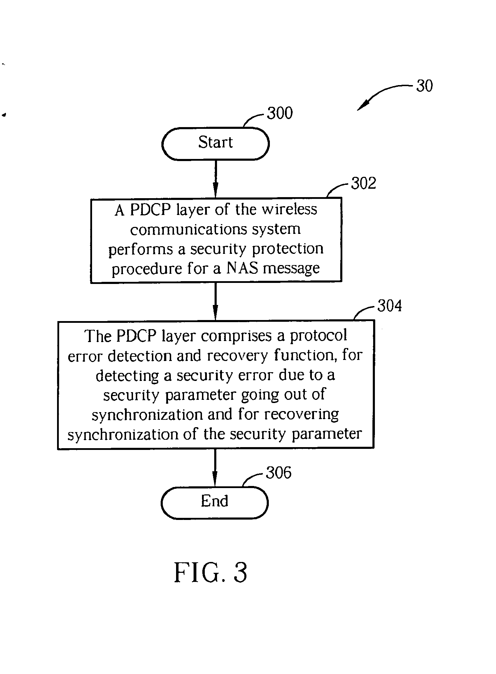

In order to enhance information security, the program code 112 can detect errors of IP or ciphering parameters and trigger error recovery, so as to prevent transmission failure due to data loss. In such a situation, the embodiment of the present invention provides a Security Authentication program code 220, for accurately recover errors of IP or cipher protection. Please refer to Fig. 3, which illustrates a schematic diagram of a process 30. The process 30 is utilized for performing security error recovery in a wireless communications system, and can be compiled into the Security Authentication program code 220. The process 30 comprises the following steps:
Step 300: Start.
Step 302: A PDCP layer of the wireless communications system performs a security protection procedure for a NAS message.
Step 304: The PDCP layer comprises a protocol error detection and recovery function, for detecting a security error due to a security parameter going out of synchronization and for recovering synchronization of the security parameter.
Step 306: End.

According to the process 30, when a NAS message is preformed a security protection procedure, if a security error due to a security parameter (e.g. HFN) going out of synchronization occurs, the embodiment of the present invention performs the protocol error detection and recovery through the PDCP layer. Preferably, the security protection procedure can be an IP procedure or a ciphering protection procedure.

Therefore, via the process 30, the embodiment of the present invention can timely detect the security error due to IP or ciphering parameter going out of synchronization in NAS messages, and trigger error recovery, to prevent NAS transmission failure due to NAS message loss.

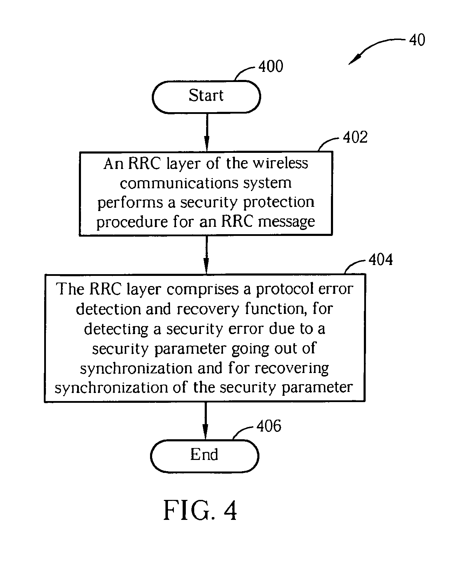

Please refer to Fig. 4, which illustrates a schematic diagram of a process 40. The process 40 is utilized for performing security error recovery in a wireless communications system, and can be compiled into the Security Authentication program code 220. The process 40 comprises the following steps:
Step 400: Start.
Step 402: An RRC layer of the wireless communications system performs a security protection procedure for an RRC message.
Step 404: The RRC layer comprises a protocol error detection and recovery function, for detecting a security error due to a security parameter going out of synchronization and for recovering synchronization of the security parameter.
Step 406: End.

According to the process 40, when an AS RRC message is preformed a security protection procedure, if a security error due to a security parameter (e.g. HFN) going out of synchronization occurs, the embodiment of the present invention performs the protocol error detection and recovery through the RRC layer. Preferably, the security protection procedure can be an IP procedure or a ciphering protection procedure.

Therefore, via the process 40, the embodiment of the present invention can timely detect the security error due to IP or ciphering parameter going out of synchronization in AS RRC messages, and trigger error recovery, to prevent AS RRC transmission failure due to AS RRC message loss.

In summary, the embodiment of the present invention provides security error detection and recovery of IP or ciphering parameter going out of synchronization for NAS messages and AS RRC messages, so as to prevent transmission failure due to message loss.

## Claims

1. A method for performing security error recovery in a wireless communications system comprising:
a Packet Data Convergence Protocol layer of the wireless communications system performing a security protection procedure for a Non-Access Stratum message (302); and
**characterized by** the Packet Data Convergence Protocol layer comprising a protocol error detection and recovery function, for detecting a security error due to a security parameter going out of synchronization and for recovering synchronization of the security parameter (304).

2. The method of claim 1, **characterized in that** security protection procedure is an integrity protection procedure.

3. The method of claim 1, **characterized in that** security protection procedure is a ciphering protection procedure.

4. A method for performing security error recovery in a wireless communications system comprising:
a Radio Resource Control layer of the wireless communications system performing a security protection procedure for a Radio Resource Control message (402); and
**characterized by** the Radio Resource Control layer comprising a protocol error detection and recovery function, for detecting a security error due to a security parameter going out of synchronization and for recovering synchronization of the security parameter (404).

5. The method of claim 4, **characterized in that** security protection procedure is an integrity protection procedure.

6. The method of claim 4, **characterized in that** security protection procedure is a ciphering protection procedure.

7. A communications device (100) for accurately performing security error recovery in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
a Packet Data Convergence Protocol layer of the wireless communications system performing a security protection procedure for a Non-Access Stratum message (302); and
**characterized by** the Packet Data Convergence Protocol layer comprising a protocol error detection and recovery function, for detecting a security error due to a security parameter going out of synchronization and for recovering synchronization of the security parameter (304).

8. The communications device of claim 7, **characterized in that** security protection procedure is an integrity protection procedure.

9. The communications device of claim 7, **characterized in that** security protection procedure is a ciphering protection procedure.

10. A communications device (100) for accurately performing security error recovery in a wireless communications system comprising:
a control circuit (106) for realizing functions of the communications device (100);
a processor (108) installed in the control circuit (106), for executing a program code (112) to command the control circuit (106); and
a memory (110) installed in the control circuit (106) and coupled to the processor (108) for storing the program code (112);
wherein the program code (112) comprises:
a Radio Resource Control layer of the wireless communications system performing a security protection procedure for a Radio Resource Control message (402); and
**characterized by** the Radio Resource Control layer comprising a protocol error detection and recovery function, for detecting a security error due to a security parameter going out of synchronization and for recovering synchronization of the security parameter (404).

11. The communications device of claim 10, **characterized in that** security protection procedure is an integrity protection procedure.

12. The communications device of claim 10, **characterized in that** security protection procedure is a ciphering protection procedure.
